(19) Europäisches Patentamt

European Patent Office

Office européen des brevets

(11) **EP 3 257 818 A1**

(12) **EUROPEAN PATENT APPLICATION**

(43) Date of publication:
   **20.12.2017 Bulletin 2017/51**

(51) Int Cl.:
   **C02F 1/461** (2006.01)    **C02F 1/463** (2006.01)
   **C02F 1/467** (2006.01)

(21) Application number: **16382276.0**

(22) Date of filing: **15.06.2016**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **MA MD**

(71) Applicant: **AQUATEC, PROYECTOS PARA EL SECTOR DEL AGUA, S.A.U.**
   **28037 Madrid (ES)**

(72) Inventor: **BLASI ROMA, Miquel**
   **08290 CERDANYOLA DEL VALLES (ES)**

(74) Representative: **Sugrañes Patentes y Marcas**
   **Calle Provenza 304**
   **08008 Barcelona (ES)**

(54)    **A METHOD AND SYSTEM FOR ELECTROCHEMICALLY PURIFYING WATER**

(57)    A method for electrochemically purifying water which comprises transporting a flow of water to be purified through a bed of metallic particles confined in a reactor and subjected to electrical voltage, the metal of the particles being electrochemically dissolved into the water in order to promote chemical reactions which facilitate the purification of the water and consequently said particles being consumed, the method comprising monitoring the consumption of said particles in the reactor without draining the reactor of water to be purified; and introducing new particles into the reactor if the consumption of particles reaches a predetermined reference threshold value, it being possible to monitor the consumption of the particles by monitoring the mass of the particles in the reactor, preferably by weighing the reactor and the content thereof.

Fig. 2

EP 3 257 818 A1

**Description**

Technical sector of the invention

The invention relates to a method for electrochemically purifying water which uses particles, particularly anodic particles, applicable for example for treating surface, subterranean and waste water, produced water (connate water), lixiviated or aqueous liquid residues.

The invention also relates to a system for putting the method into practice and to an electrochemical reactor applicable for purifying water by means of various electrochemical techniques, such as electrocoagulation or electroperoxi-coagulation.

Background of the invention

The 3D electrochemical reactors are reactors with sacrificial anode particulates. These types of reactors have been described for years both in the format of packed bed and in fluidized bed.

Thus for example, patent document US 5372690 relates to a device and to an alternative electrochemical method to those that use reactors with fixed consumable electrodes, which are expensive and which require significant manual labor for frequent replacement. The document US 5372690 proposes to use a bed with consumable anodic metallic particles through which the water to be purified is made to flow and through which an electric current is applied. The particles are confined to a flood chamber and said chamber has a cap for replacing the metallic particles. This replacement by way of the cap is simpler than that which is required for replacing conventional electrodes. However, the industrial implementation of 3D reactors in the treatment of different effluents continues being practically non-existent due to the fact that there continue to be various drawbacks pending resolution. For example, the ideal conditions in the interior of the reactor for the desired chemical reactions to be rapidly produced are altered or disappear. This is due to various factors which occur in unison such as the consumption of the particles and due to the dirt which accumulates on the surface of these or of the electrodes. The patent document US 5372690 does not resolve how to maintain the ideal conditions in the interior of the reactor nor does it provide any solution for preventing a frequent manual replacement operation of the particles.

The patent US 6200449 also relates to a method and to a treatment for water which uses a 3D electrochemical reactor, that is to say that it uses a plurality of anodic particles, electrical conductors and consumables. The document US 6200449 mentions the need for having to periodically replace the particles with new particles, however, it does not describe any control means for knowing when said particles have to be replaced and nor does it provide any solution for preventing a frequent manual replacement operation of the particles.

In spite of assessing the quality of the discharge water or the variation of the voltage within the reactor, it can be inferred that the ideal conditions in the interior of the reactor have been altered. It is not described in US 5372690 or in US 6200449 how to know whether this alteration is due to an increase of dirt or due to the consumption of the particles or to what extent each one of these factors contributes to altering the ideal conditions in the reactor. Consequently, the operation of replacing particles responds to a programed actuation.

Maintaining a particle bed which fulfils determined conditions is essential for maintaining an average current density (amperes/cm$^2$) and an anodic contact surface between contaminant and anodic surface for correct treatment of cleaning or purifying the water. At the same current amperage (A) but with fewer particles or less than what would be ideal, these particles have a current density much greater than that which is optimal, which affects the output of the system because it produces more soiling and passivity of the particles.

In short, maintaining a particle bed in conditions impacts both the quality of the treatment and the consumption of energy required for putting it into practice. Therefore, maintaining a particle bed in conditions within the reactor impacts the output of the purification method.

Consequently, the present invention has, as the principal objective, a method which allows an assessment to be made as to whether the particle bed is suitable for guaranteeing the correct treatment of the water and optimizing the performance of this treatment.

An active method is also an objective of the invention which allows the deficit of particles of the particle bed to be corrected, a deficit which can be reached as said particles are consumed.

A system and a reactor are also an objective of the invention which allow this method to be practically implemented without technical complexities which make it expensive. It is of interest since both the system as a whole and the reactor are constructively simple, robust and precise, while at the same time they allow the drawbacks associated with a slow and manual particle replacement operation to be overcome.

Another significant drawback in the industrial application of 3D reactors is the functional control of these by means of correct anodic and cathodic cleaning which guarantees the electrical and purifying efficiency.

There are various proposals applicable to conventional reactors and to 3D reactors such as those described in the patent documents WO200526412 and WO200456711 which use various systems for anodic and cathodic cleaning by means of increases and decreases of intensity, chemical cleaning, mechanical cleaning, ultrasounds or by means of changes of polarity. These systems operate in a preventative manner, following execution schedules based on accumulated experiences or after operational problems being produced, with the consequent stoppages of the system in the majority of cases.

Description of the invention

The method which is proposed for electrochemically purifying water is such that it comprises transporting a flow of the water to be purified through a bed of metallic particles confined in a reactor and subjected to electrical voltage, the metal of the particles being electrochemically dissolved into the water in order to promote chemical reactions which facilitate the purification of the water and consequently said particles being consumed.

In essence, the method according to the invention is characterized in that it comprises monitoring the consumption of said particles in the reactor without emptying the reactor of water to be purified; and introducing new particles into the reactor if the consumption of particles reaches a predetermined reference threshold value.

The monitoring the consumption of the particles and the consequent actuation for replacing these if the consumption thereof reaches a reference threshold value, not only helps to maintain the ideal conditions in the interior of the reactor, but also allows it to be inferred that the measureable alterations of other physical parameters associated with alternations of the ideal conditions in the interior of the reactor such as a variation of the electrical voltage, are due to other factors different to the excessive consumption of the particles and therefore taking measures aimed at correcting these other factors. One of these factors may be, as is explained below, the accumulated dirt and one of the measures for correcting, preventing or delaying this factor may be operating cleaning devices with which the reactor can be equipped.

When the consumption of the particles is monitored, the person skilled in the art can adapt techniques known in other fields of application. Although there are a multitude of techniques for controlling the level of particles in a determined medium or recipient, not all of them are ideal for being applied in an electrochemical reactor where there is simultaneously a strong electric field, a high flow rate, a heterogeneous medium (solid/liquid), high turbidity and corrosion phenomena. The majority of the known techniques are unsuitable for being able to implement this control with great precision because they have some interference with some of these processes or phenomena which take place in the interior of the reactor. These techniques which are applicable, but with interferences, and which would not therefore ensure the desired precision, would include those which use sensors (vibration, by conductivity, ultrasonic, by rotary blade, optical, etc).

In the context of the present invention, the term "to monitor" should be interpreted as the action of observing, by means of special devices, the course of one or various physiological parameters or of another nature in order to detect the evolution thereof or possible anomalies. This action can be continuous or at intervals.

According to a preferred variant of the method of the invention, the monitoring of the consumption of the particles is carried out by monitoring the mass of the particles in the reactor. According to one embodiment of interest, the monitoring of the mass of the particles in the reactor is carried out by weighing the reactor and the content thereof.

Having a clear reference of the weight of the reactor, of the water which it may contain and of the weight of the particles initially introduced, the variations of weight which may be detected by weighing the reactor in operation would be directly related to the consumption of the particles because the other two variables, the weight of the reactor and of the water are constant.

This manner of proceeding is very robust and clean since the equipment required for weighing the reactor in operation can be based on the use of load cells placed outside of the reactor, that is to say without contact with the water to be purified or the particles.

Definitively, the technique which is proposed for monitoring or assessing the consumption of the particles within the reactor is based on controlling the level of existing mass at each moment in the interior of the electrochemical reactor without this measure being interfered with by any of the effects previously mentioned. This monitoring is external to the reactor, therefore, it is not affected by corrosion, electric field, flow, heterogeneous medium, turbidity, etc. The technique allows the variation of the weight of the anodic mass present to be known at each moment, independently of the total mass produced by the general weight of the other fixed components of the reactor and of the constant quantity of water in the interior of the reactor.

In one variant of the invention, the operation of introducing or replacing new particles in the reactor comprises enabling a connection between a store for new particles, external to the reactor and the reactor by means of operating a valve device which is automatically actuated when the consumption of particles in the interior of the reactor reaches the predetermined threshold value.

The replacement operation can be carried out prior to draining the reactor.

The exchange or replacement operation of electrodes/particles both in known 2D and 3D reactors is a manual or semi-assisted operation which requires a stoppage in the operation of the reactor for a period of hours where the effluent cannot be treated with these reactors and it is necessary, if a stoppage in the operation is not desired, for there to be a duplicate of reactors, which involves greater investment.

Advantageously, according to the invention, the particle replacement operation lasts seconds to minutes and can be executed without the intervention of an operator, while this same operation requires one or two individuals if it is necessary to move the electrodes, open the reactor, take out the consumed electrodes or fill with new anodic particles, reconnect electrodes, close the reactor and start up again. All these processes are fully automated in the variant of the invention referred to and do not require the intervention of operators.

In addition to being able to automate this replacement operation, it is of no less importance that the invention allows it to be known at what time it is suitable to proceed with this replacement in order to maintain the ideal conditions in the interior of the reactor. The current techniques do not allow it to be known with certainty when the ideal time for the replacement is and these operations are frequently carried out too late, which means that during an unknown period of time prior to the replacement of the particles, the purification method has been executed with performance below that which is desired.

In addition, an optimal load of anodic particles is essential as a previous step for the correct control of the functioning of the reactor both electrically and efficiently since the optimal load thereof guarantees less soiling or passivity and allows, as has been previously mentioned, improved control and prevention of other phenomena which also affect the performance of the reactor. In particular, it is possible to control better and at each moment the necessary cleaning of the interior of the reactor, including the cleaning of the particulate or fixed electrodes.

In one embodiment of the invention, the method comprises controls and operations aimed precisely at controlling the soiling and at correcting or eliminating the effects thereof in a more efficient manner than has been possible up to now.

To this end, the invention provides for the method to comprise for each type of water to be purified, establishing a correlation between the conductivity ($C_n$) of the flow of water to be purified and the margins of electrical voltage ($V_{max}$, $V_{min}$) suitable for an optimal current load ($Q$); and during the purification of water

- applying and maintaining the optimal current load ($Q$) for the water in treatment; monitoring the conductivity ($C_i$) of the flow of water introduced in the reactor and the instantaneous electrical voltage ($V_i$); and
- operating at least one device for cleaning the interior of the reactor if the monitored instantaneous electrical voltage ($V_i$) surpasses the upper margin of the corresponding electrical voltage ($V_{max}$) by a predetermined safety factor ($f$).

According to another aspect of the invention, a system for putting the method previously explained into practice is made known in the different variants thereof.

This system, intended for electrochemically purifying water, comprises a reactor in the form of a water flood chamber with an inlet for receiving water; an outlet for discharging water; a plurality of consumable electrical conductive particles housed in the chamber; means for electrifying the particles which include electrode plates and a current source; and means permeable to the water but suitable for confining the conductive particles in a work area of the chamber and which prevent the contact thereof with at least one of the electrodes.

The system is characterized in that it comprises a unit for monitoring the consumption of the particles in the reactor; a control unit capable of receiving and processing data as well as for triggering, based on these data, commands for operating one or several maintenance devices, the control unit being connected to the cited principal monitoring unit for receiving from the same the captured data relating to the consumption of the particles; and one or several of these maintenance devices, the functioning of which is regulated by the control unit, the only or one of the maintenance devices being a reloading device, capable of introducing new particles in the reactor.

In one embodiment of the invention, the unit for monitoring the consumption of particles comprises a weighing module, from which it is suspended or on which the reactor rests, the instantaneous weight of the reactor and the content thereof thus being obtained; and the control unit is prepared for comparing the measured instantaneous weight with a predetermined reference threshold value, triggering an actuation command of the reloading device as a function of the result of this comparison.

The reloading device can comprise a store for particles with a discharge pipe connected to the chamber of the reactor, a particle grader and a valve device precisely operable by the control unit.

The invention envisages that, in addition to the reloading device, there may be other maintenance devices.

This or one of these maintenance devices may be an ultrasound cleaning device which comprises an ultrasound generating unit, preferably of the magnetostrictive type.

Another maintenance device, in combination or otherwise with the previous, may be a mechanical cleaning device, equipped with a plurality of injectors of a gas, a fluid or a mixture of both under pressure which penetrate into the interior of the reactor.

In one variant of this mechanical cleaning device, it comprises a hydraulic fluid supply circuit with a principal supply branch from which various blind branches originate which penetrate into the reactor and in which the injectors are located or formed.

The invention also envisages that a supply unit of a chemical cleaning solution is connected to the hydraulic circuit previously referred to.

In one embodiment, the system comprises auxiliary monitoring units with means for measuring the conductivity (Ci) of the flow of water to be cleaned which is introduced into the chamber of the reactor; the electrical voltage (Vi) between the electrodes; and the current load (Q), the control unit being connected to the auxiliary monitoring units for receiving the data measured by these and the cited control unit being prepared for processing these data received from the auxiliary monitoring units to compare them with a predetermined optimal pattern and for operating the device or, as the case may be, the cleaning devices previously described as a function of the result of this comparison.

In the case of the system being equipped with more than one cleaning device, in one preferred variant, a degree or order of priority is provided to each cleaning device and the control unit is prepared for activating the cleaning devices in a cascading manner or sequentially following this degree or order of priority according to the deviation of the data received from the auxiliary monitoring units with the predetermined optimal pattern.

According to a constructive solution, in the chamber of the reactor, a bottom is distinguished, which is arranged below the work area of the chamber, which determines an expansion area to which the inlet for receiving water is connected, a general draining outlet and a lower connection with a recirculation circuit; a middle portion, through which the blind branches of the mechanical cleaning device penetrate and in which all or most of the electrode plates are arranged; an upper part to which the outlet for discharging water is connected, an upper connection with the recirculation circuit and an inlet for introducing particles into the reactor, all the connections to the reactor being prepared to absorb a vertical movement of the reactor caused by the loss of mass associated with the consumption of the particles or by gaining mass associated with the introduction of new particles into the reactor.

Brief description of the drawings

Fig. 1 shows the logical architecture of a system for electrochemically purifying water, according to one variant of the invention, and in particular the inputs which the control unit receives and the maintenance devices which this unit is capable of operating;

Fig. 2 schematically and globally shows a constructive solution of a system for electrochemically purifying water, according one variant of the invention;

Figs. 3 and 4 also schematically illustrate some details of the system of Fig. 2 relating to a mechanical cleaning device and to an ultrasound cleaning device, respectively operated by the control unit;

Fig. 5 schematically shows a particle reloading device, operated by the control unit; and

Fig. 6 graphically illustrates the information which defines an optimal pattern for the purification of a type of water to be purified, specifically coming from the chemical industry for manufacturing phenolic resins, information which the control unit may have stored for comparing with the data received from the auxiliary monitoring units.

Detailed description of the invention

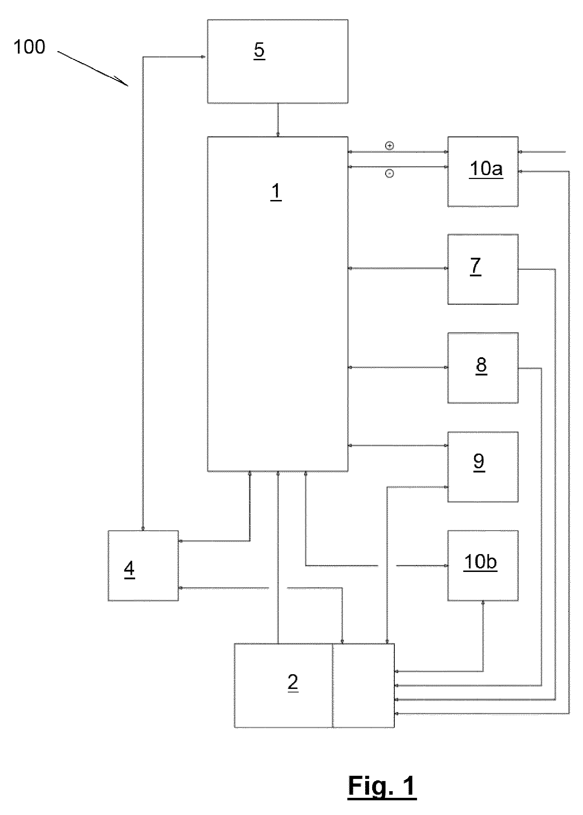

The system of Fig. 1 is a smart system which monitors physical parameters based on which it can be inferred that the conditions in the interior of the reactor have deviated from an optimal pattern which defines determined ideal conditions, the system also being prepared for automatically executing determined actions for correcting these deviations.

These ideal conditions will be those which the person in the art has determined based on experience and would vary as a function of the nature of the water to be purified. For each type of water, the person skilled in the art knows the amperage and for how much time by volume of liquid it is necessary to apply to the water in order to purify it to the desired levels. The resistivity of the medium in ideal conditions determines the ideal voltage margins Vmax, Vmin. As these conditions in the medium change, for example because the anodic particles are worn or because the dirt impregnates these same particles or the electrodes, which ensure the electric voltage, change the resistivity of the medium and this is translated into a variation in the instantaneous voltage Vi. As the person skilled in the art knows the voltage margins Vmax, Vmin associated with the ideal conditions by comparing the instantaneous voltage Vi with these margins Vmax, Vmin it is possible to know whether the conditions of the medium have deviated from the ideal conditions and an actuation should be carried out to correct this deviation. A control unit automates this exercise in the system of the invention.

As the system of the invention is also prepared to maintain the level of particles within the optimal margins, the deviation of the instantaneous voltage Vi from the ideal margins Vmax, Vmin will be due to factors different to excessive consumption of particles, therefore due to in large part to a soiling factor. In these circumstances, the system will operate cleaning means for reestablishing the ideal conditions in the medium.

In this case, the voltage margins Vmax, Vmin associated with the ideal conditions of the medium can vary for the same type of water to be purified according to the load which is carried. For this purpose, experience includes knowing what these voltage margins Vmax, Vmin are for a water of the same nature according to the conductivity of the water to be purified.

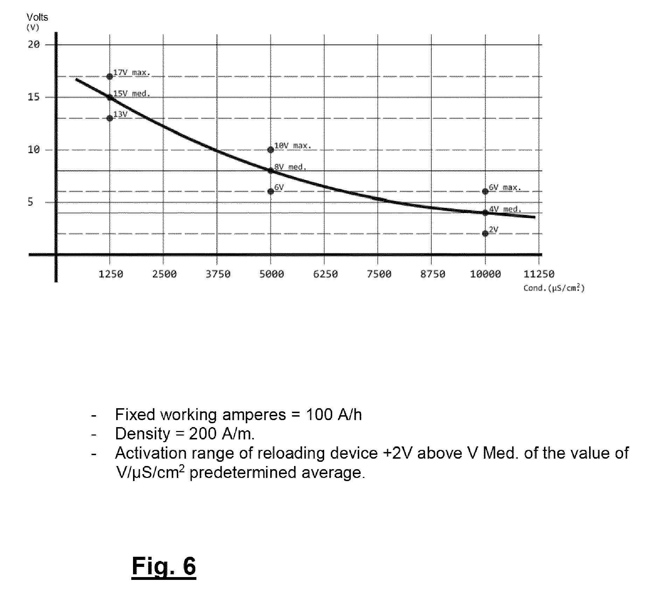

By way of example, Fig. 6 graphically illustrates the type of information which the system should acquire for automatically putting the method according to the invention into practice to its full potential. Fig. 6 is an example of ranges for the actuation of a particle reloading device in a type of industrial chemical water according to the conductivity Ci of the effluent in the reactor.

Fig. 1 shows a system 100 capable of putting into practice all the correcting measures previously described, for the purpose of maintaining the ideal conditions of the medium, that is to say, of the water and of the particles, in a reactor 1.

The system of Fig. 1 comprises, in addition to the cited reactor 1, a control unit 2 which processes data received from a monitoring unit 4 of the consumption of particles in the reactor and of various auxiliary monitoring units 10a, 10b with means for measuring the conductivity (Ci) of the flow of water to be purified which is introduced in the reactor 1, the electrical voltage (Vi) to which the flow of water, which passes through the reactor 1, is subjected and the current load Q.

The unit 4 for monitoring the consumption of particles sends the information acquired to the control unit 2 which processes it, it specifically compares whether the level of consumption of the particles reaches a reference threshold level and whether it thus generates an actuation command of a particle reloading device 5. The control unit 2 thus operates this reloading device 5 in the manner necessary for replacing the particles consumed in the reactor 1.

When the monitoring of the consumption of the particles is carried out by monitoring the mass of the particles in the reactor 1, it is provided for the minimum activation load of the reloading device 5 to be when a loss of 1/3 of the reference particle mass is reached. Consequently, it is ensured that the working density loss does not surpass 30% of the density established as a reference.

The auxiliary monitoring units 10a and 10b, in turn, send the measurements obtained of instantaneous voltage Vi and instantaneous conductivity Ci from the water, which enters the reactor 1, to the control unit 2. This control unit 2 processes the information and determines whether the instantaneous voltage Vi is within the corresponding safety margins Vmax, Vmin and if this is not the case, it generates an activation command of one or several cleaning devices.

In the example of Fig 1, the system 100 comprises an ultrasound cleaning device 7; and a mechanical cleaning device 8 prepared for operating together or otherwise with a unit 9 for metering a chemical cleaning solution.

The operation and therefore the actuation of the different cleaning devices is carried out in sequence or in a cascading manner as a function of whether the instantaneous tension Vi can be reestablished within the ideal margins Vmax, Vmin.

In the example, first the mechanical cleaning device is actuated injecting a mixture of fluid and gas into the interior of the reactor 1 without stopping the functioning thereof and, if the voltage is not reestablished to the ideal values, the ultrasound cleaning device 7 is actuated, also without stopping the functioning of the reactor 1. If the tension is not reestablished, the protocol envisages carrying out sudden load changes without stopping the reactor 1. If it continues without reestablishing the voltage to ideal values, the metering unit 9 for injecting the chemical cleaning solution will be operated simultaneously or otherwise with the actuation of the ultrasound cleaning device 7. In this case, it will be necessary to stop the reactor 1 in order to purge the same, especially of the cleaning chemicals, in order to again subsequently reestablish the flow of water and the current.

The invention also provides for the protocol, that is to say the command or the simultaneity, of the actuation of the cleaning devices to be capable of being different. At the same time, it also provides for preventative cleanings to be included in the protocol. The preventative cleanings are programed during the initial phase of putting the purification process into operation, determining how many of each type are carried out and with what frequency, depending on the type of effluent treated.

With this smart system 100, maximum electrical and purification performance is guaranteed, in addition to drastically minimizing the maintenance work and replacement of electrodes, the stoppages of the process and the consumption of reagents.

**Comparative example of saving of investment in equipment and maintenance time, as well as anodic consumption, between the three versions of electrochemical reactor (2D reactor with plates or discs (2D), 3D reactor without smart system and 3Di reactor according to the invention (with smart system).**

The scenarios to be compared will be for a flow rate of 1000 $m^3$/h and an electrical charge of 0.1 Ah/L for 24 hours. With an estimated electrode consumption in each type of reactor of 2,400 Kg/day:

- 2D - reactor with 25 plates X 20 kg of iron per unit = **500 Kg** of total electrode.
- 3D - reactor with **500 kg** of iron per electrochemical cell.
- 3Di - reactor with 500 kg of iron per cell + 3,500 Kg in a secondary tank + 20,000 kg in a general tank = **24,000 kg** total automatically available.

Need for exchange or replacement operations of electrodes per day:

- 2D - 2,400 kg/day of consumption: 500 kg/reactor = **4.8 times per day.**
- 3D - 2,400 kg/day of consumption: 500 kg/reactor = **4.8 times per day.**
- 3Di - 2,400 kg/day of consumption: 24,000 kg/ reserve external to reactor =

**0.1 times per day.**

Assessing that this number of exchanges per day is not sustainable, it is estimated how many reactors are necessary for an exchange per week (2,400 kg/day X 7 days = 16.8 Tn).

- 2D 16.8 Tn : 0.5 Tn/reactor = 37 reactors
- 3D 16.8 Tn : 0.5 Tn/reactor = 37 reactors
- 2Di 16.8 Tn : 24 Tn/system = 0.7 reactors which, in practice, results in 1 reactor / max. 2 for safety.

Comparison of maintenance hours: Table 1

| REACTOR | NO. REACTORS | ESTIMATED HOURS OF REPLACEMENT AND MAINTENANCE PER YEAR |
|---------|--------------|---------------------------------------------------------|
| 2D | 37 | 8,800 |
| 3D | 37 | 4,144 |
| 3Di | 2 | 1,560 |

As can be observed, the difference in total maintenance hours for using a 3Di reactor compared to the others is 5.6 times less than for 2D and 2.6 times less than for the 3D reactor.

**Comparative example in purification efficiency and saving on electrical and anodic consumption between reactors: 2D and 3Di.**

Comparison (Table 2) of purification efficiency between reactor 2D and 3Di for chemical oxygen demand (COD), total Kjeldahl nitrogen (tKN), nickel in fracking water (% of removal) using various electrochemical techniques (electrocoagulation (EC), electroperoxi-coagulation (EP) and electrooxidation/electrodisinfection (EO)).

| | COD | | TKN | | NICKEL | |
|---|-----|-----|-----|-----|--------|-----|
| | 2D | 3Di | 2D | 3Di | 2D | 3Di |
| EC-Fe 0.05 Ah.L$^{-1}$ | 64% | 73% | 22% | 46% | 88% | 97% |
| EC-Fe 0.1 Ah.L$^{-1}$ | 68% | 92% | 40% | 84% | 96% | 99% |
| EC-Fe 0.1 Ah.L$^{-1}$ + EO 1 Ah.L$^{-1}$ | 82% | 92% | 56% | 92% | | |
| EC-Fe 0.1 Ah.L$^{-1}$ + EO 2 Ah.L$^{-1}$ | 91% | 96% | 96% | 99% | | |
| EP 0.05 Ah.L$^{-1}$ | 81% | 95% | 28% | 56% | | |
| EP 0.075 Ah.L$^{-1}$ | 95% | 99% | 44% | 70% | | |

As can be observed in all the cases of the 3Di technology, it is equally efficient at half Ah/L applied to the same water to be purified and in comparison with a conventional 2D system.

Comparison (Table 3) of electrical efficiency and anodic consumption between 2D and 3Di reactors.

| REACTOR | TECHNIQUE | Kw/m3 | Kg electrode/m3 |
|---------|-----------|-------|-----------------|
| 2D | EC | 1.5 | 0.1 |
| | EO | 8 | - |
| | EP | 1.12 | 0.075 |
| 3Di | EC | 0.3 | 0.05 |
| | EO | 4 | - |

(continued)

| REACTOR | TECHNIQUE | Kw/m3 | Kg electrode/m3 |
|---------|-----------|-------|-----------------|
|         | EP        | 0.3   | 0.05            |

The difference in electrical consumption is between 5 times less for EC, 2 times less for EO and 4 times lower for EP between 2D technology (more consumption) and 3Di technology (less consumption). The difference in anodic consumption is equally significant, in the order of half in favor of EC-3Di and approximately 33% lower for EP-3Di.

Exemplary embodiment

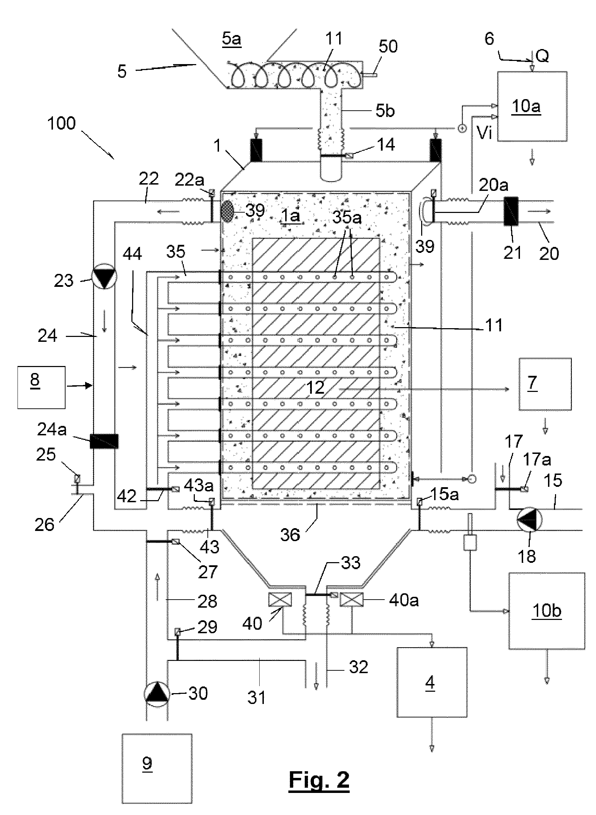

Fig. 2 shows a system 100 according to one embodiment of the invention. This system 100 comprises a reactor 1 which has a chamber 1 a flooded with fluid and which contains a fixed bed of anodic particles 11.

The anodic particles 11 may be in the form of spheres, cylinders, irregular pellets, small flakes, films, etc., with a size/diameter between 0.2 mm and 10 mm, preferably between 2 mm and 5 mm and especially in the form of spheres or cylinders.

The material is selected according to the technique to be applied for purifying the water.

For electrocoagulation (EC) techniques, particles 11 from the following are preferred: aluminum, iron, magnesium or other alloys of these.

For electrooxidation/electrodisinfection (EO/ED) techniques, long-lasting and non-sacrificial particles 11 from the following are preferred: graphite, graphene, graphite/graphene alloy, diamante doped with boron, DSA catalyzing metals (ruthenium, iridium, platinum, tin, antimony, lead dioxide, titanium dioxides or alloys of these or others).

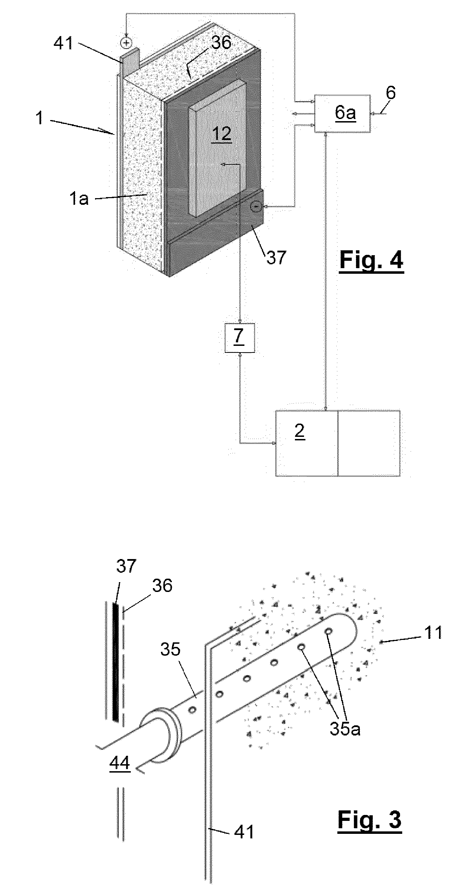

The exemplary reactor 1 is equipped with two fixed plate electrodes, a cathode 37 and an electrifying anode 41 (see Fig. 4) connected to a rectifier 6a, in turn, connected to a current source 6, the assembly being suitable for maintaining a current load in the electrical circuit which will be closed by mediation of the particles 11 in the interior of the chamber 1 a. The cathode may be made of stainless steel, titanium or any titanium medium with a coating. The anode for electrifying the anodic particles 11 may be made of titanium, coated titanium, graphite or any other non-wearing conductive material.

The enveloping of the chamber 1 a may be made of plastic material.

In a work area of the chamber 1a, separator means 36 permeable to the water, but suitable for confining the conductive particles 11 are installed in the chamber 1a of the reactor 1 and suitable for preventing the contact thereof with the cathode 37. These separator means 36 may be formed by Teflon mesh or any other porous non-conductive material in order to prevent short-circuiting between the mass of anodic particles 11 and the cathode 37.

Fig. 4 shows a possible constructive solution in which the cathode 37 and the anode 41, parallel to each other, are applied against the lower surface of the plastic enveloping of an essentially parallelepipedic chamber 1a. The distance between the electrodes may vary, but it is recommended it is between 1 and 7 cm.

A reactor 1 like the one of the invention may work with flow rates between 1 $m^3$/h up to 1,000 $m^3$/h (as a function of the Ah/L) and with low current densities due to the very high anodic working surface (between 5 $m^2$ to 50 $m^2$ per reactor), conventionally between 5 mA/$cm^2$ to 50 mA/$cm^2$, normally between 5 mA and 25 mA, depending on the flow rate and reactor model selected.

The working voltages should not exceed 20 V, preferably between 4 V and 12 V, varying according to the conductivity of the effluent. The amperes fluctuate as a function of the $m^3$ to be treated and model selected between 100 A and 10,000 A.

Although in the example of Fig. 4, an essentially parallelepipedic chamber 1 a is depicted, other configurations are possible.

Similarly, although in the example of Fig. 4, a chamber 1a with two opposed electrodes has been depicted, it is provided, as is already known, for the same reactor to have two anodic bed chambers, sharing the same electrifying anode in the middle of the two chambers and two cathodes being at both sides and at the top two chamber outlets joined and only one inlet to the same expansion chamber below the reactor.

Fig. 4 also serves to show the arrangement of the ultrasound cleaning device 7, in particular the ultrasound generating unit 12, of the magnetostrictive type in the example.

In effect, this type of ultrasound of between 20 KHz to 25 KHz has been selected because in only one transducer unit per cathode, it is possible to emit a quantity of ultrasounds and with a vibratory power much greater than conventional ultrasounds, achieving a greater cleaning depth.

The magnetostrictive ultrasound emitters are significantly different from the typical ceramic transducers, enabling, in one single device, a power between 1,400 W to 2,800 W when many ceramic transducer units with powers of 50 W/unit are needed to achieve this same magnitude of power.

The invention provides for maintaining an emission of 20-25 KHz with a single device installed per reactor 1, varying the power of the magnetostrictive emitter between 1,400 W to 2,800 W as a function of the size of the reactor. The installation of this type of ultrasound allows low maintenance (one single unit), a longer average life compared (approximately x3 times longer than ceramics) and a comparable cost.

Returning to Fig. 1, in the exemplary chamber 1a, a bottom, which is arranged below the working area of the chamber 1a, is distinguished, which determines an expansion area of the effluent to which the inlet 15 for receiving water is connected equipped with a corresponding valve 15a; and a general draining outlet 32 with the corresponding valve 32a; and a lower connection 43 with a recirculation circuit 24 equipped with the corresponding valve 43a thereof.

In the example, a reagent supply conduit 17 is connected to the inlet 15 for receiving water, according to the process, for example, hydrogen peroxide in a method based on the electroperoxi-coagulation (EP) technique by means of the corresponding valve 17a.

In the upper part of the chamber 1a, the outlet 20 for discharging water is connected, equipped with the corresponding valve 20a thereof and with a filter element 39 for preventing the loss of particles 11 by entraining; the upper connection 22 with the recirculation circuit 24, equipped with the valve 22a thereof and also with another filter element 39 for preventing the entraining of particles 11; and the connection with a discharge pipe 5b of a device 5 for reloading new particles 11 for introducing said new particles into the chamber 1a of the reactor 1.

In the example, a flow rate meter 21 is arranged at the outlet 20 of the water which controls the flow rate of the impulsion pump 18 for the supply of water to be purified.

The reloading device 5 previously mentioned comprises a store 5a for new particles 11 with a discharge pipe 5b connected to the chamber 1a of the reactor equipped with a particle grader 50 and a valve device 14 operable by the control unit 2. The grader is depicted in the form of an endless grader, although it can be implemented in a different manner, such as for example a vibrator or be based on pneumatic transport and the function thereof is to transport the accumulated particles to the discharge pipe and prevent clumping or compacting which may cause closures and interrupt the advance of the particles. The valve 14 is preferably a guillotine valve, but can be another type suitable for operating in a particle environment. In any case, both the grader 50 and the valve 14 are operated by the control unit 2.

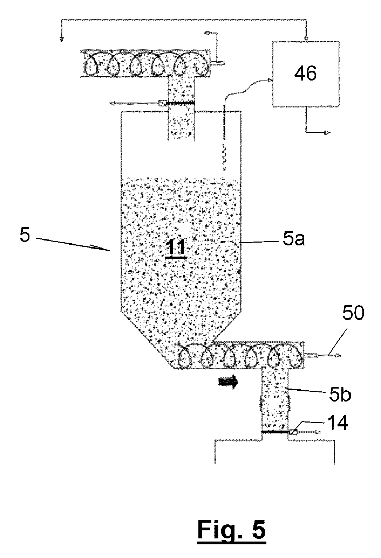

Fig. 5 illustrates a particular construction for the supply of new particles 11. In this construction, the store 5a, in the general form of a hopper, is manufactured from a material resistant to abrasion, corrosion and deformation by weight and is equipped with a height sensor 46 capable of measuring the level of particles 11 in the store 5a; in this case it can be an optical sensor or a laser type sensor, although load cells or ultrasounds can also be used for estimating the quantity of particles 11 in the store 5a. This store 5a becomes a lung which, in turn, is fed by a larger tank which can supply particles to other lungs for the replacement for other such reactors.

The store 5a of particles is above the reactor 1 and the total capacity thereof is selected as a function of the model selected for more or less unitary autonomy, it is preferably selected with a capacity equivalent to approximately 5 times the useful space of the reactor 1 in particles.

The reactor 1 rests on one or several load cells 40a of a weighing module 40 suitable for measuring weight variations in the assembly formed by the reactor 1, the water and the particles which rests on said load cells 40a.

Note that all the connections with the reactor 1 are prepared for absorbing a vertical movement of the reactor 1 caused by the loss of mass associated with the consumption of particles 11 or by the gaining of mass associated with the introduction of new particles 11 in the chamber 1a of the reactor 1. In Fig. 2, the connection points are represented in the form of corrugated tubes, capable of absorbing the misalignment between the floating reactor 1 and the fixed inlet and outlet conduits connected to the reactor 1.

The recirculation circuit 24 is used for helping to maintain a minimum water velocity in the interior of the reactor 1 and also forms part of the mechanical cleaning device 8. The recirculation circuit 24 is equipped with an impulsion pump 23 controlled by the flow rate meter 24a and with an air inlet valve 25 with which the mechanical cleaning device 8 operates.

This mechanical cleaning device 8 comprises, in the example, a hydraulic fluid supply circuit with a principal supply branch 44 connected to the recirculation circuit 24 by means of the corresponding valve 42 from which various blind branches 25 originate which penetrate into the chamber 1a of the reactor 1 in the middle portion thereof and in which injectors 35a are located or formed, all of which is illustrated in Fig. 3.

In the example, the blind branches 35 are plastic tubes and the injectors 35a are perforations made into the plastic tubes, the purpose of which is to inject jets of a mixture of water and air into the interior of the chamber 1a in an area of the particle 11 bed for removing the accumulated solids.

In the example, hydraulic connection can be established between the principal supply branch 44 and a unit for metering 9 a chemical cleaning solution by means of piping 28 and the corresponding valve 27 with the help of the impulsion pump 30.

The chemical solution can be an acid (such as 5% hydrochloric acid) for limey or alkaline scale (such as 5% sodium hydroxide) for organic or oily dirt.

In the example, hydraulic connection can also be established between the general discharge outlet 32 and the conduit 28 for improved purging of the reactor 1 after chemical cleaning having been carried out.

The functioning of the system 100 responds to that which was already explained with reference to Fig. 1. On the one hand, the unit for monitoring the consumption of particles 4 by means of the load cells 40 sends data relating to the weight of the reactor 1 to the control unit from which data the instantaneous mass of the particle bed 11 in the interior of the chamber 1 a can be extracted. When this instantaneous mass Mi is of the order of 30% below the reference mass Mr, the control unit operates the reloading device 5 for replacing particles, specifically it actuates the corresponding grader 50 and the valve 40 to enable connection between the store 5a and the chamber 1a. This replacement ends when the instantaneous mass Mi reaches the reference value Mr or a factor of this reference value in order to have a safety margin. The control unit 2 then stops operating the reloading device 5.

In one manner of proceeding, prior to the replacement of particles 11 in the reactor 1, the pumping of water to be purified is interrupted and the current supply is simultaneously interrupted in order to carry out the draining of water from the reactor, closing the valves 15a, 20a, 22a and 43a and opening the outlet valve 33. Once the anodic mass level Mr has been reached, the operation is carried out in reverse and the current and the treatment flow rate are reestablished. During the draining, the separator means 36 prevent the outlet of particles 11 with a size greater than the gap of the Teflon mesh, allowing the particles 11 inside the chamber 1 a, which are still partially consumed, to be able to continue carrying out their function.

Although the system 100 of the invention is applicable to various electrochemical techniques, it is the case that for electrooxidation/electrodisinfection (EO/ED) it is not necessary to provide, in the system, the unit for monitoring the consumption of particles 4 for controlling the particle bed mass or the associated reloading device 5 since the particulate anodes are not changed until after a number of years. Consequently, if it is not necessary to have a versatile system 100 and the same is always used for this EO/ED technique, it may in particular be of interest not to provide the system 100 with the unit for monitoring the consumption of particles 4. The resulting system would still incorporate, in this case, the cleaning devices and the characteristics described in the characterizing part of claim 13 in order to carry out a purification method according to the characterizing part of claim 5.

The same control unit 2 receives, during the purification of the water, and by means of the auxiliary monitoring units 10a, 10b, the data relating to the conductivity (Ci) of the flow of water to be purified and relating to the electrical voltage (Vi), data which is compared with the pattern corresponding to the nature of the water being purified stored in the control unit 2, which processes the data obtained and compares them with the pattern for operating the device or, as the case may be, the cleaning devices as a function of the result of this comparison.

## Claims

1. A method for electrochemically purifying water, comprising transporting a flow of water to be purified through a bed of metallic particles confined in a reactor and subjected to electrical voltage, the metal of the particles being electrochemically dissolved into the water in order to promote chemical reactions which facilitate the purification of the water and consequently said particles being consumed, **characterized in that** the method comprises

   - monitoring the consumption of said particles in the reactor without draining the reactor of water to be purified, preferably without interrupting the flow of the water to be purified; and
   - introducing new particles into the reactor if the consumption of particles reaches a predetermined reference threshold value.

2. The method according to claim 1, **characterized in that** the monitoring of the consumption of the particles is carried out by monitoring the mass of the particles in the reactor.

3. The method according to claim 2, **characterized in that** the monitoring of the mass of the particles in the reactor is carried out by weighing the reactor and the content thereof.

4. The method according to any one of the preceding claims, **characterized in that** the operation of introducing new particles into the reactor comprises enabling a connection between a store of new particles, external to the reactor, and the reactor, by means of the operation of a valve device which is automatically actuated when the consumption of particles in the interior of the reactor reaches the predetermined threshold value.

5. The method according to any one of the preceding claims, **characterized in that** it comprises, for each type of water to be purified

   - establishing a correlation between the conductivity (Cn) of the flow of water to be purified and the margins of the electrical voltage (Vmax, Vmin) suitable for an optimal current load (Q), being

$$Q = (current\ intensity * time) / volume\ of\ water\ to\ be\ purified$$

and during the purification of water
- applying and maintaining the optimal current load (Q) for the water in treatment;
- monitoring the conductivity ($C_i$) of the flow of water introduced in the reactor and the instantaneous electrical voltage ($V_i$); and
- operating at least one device for cleaning the interior of the reactor if the monitored instantaneous electrical voltage ($V_i$) surpasses the upper margin of the corresponding electrical voltage (Vmax) by a predetermined safety factor (f).

6.  A system (100) for electrochemically purifying water comprising a reactor (1) in the form of a water flood chamber (1a) with an inlet (15) for receiving water; an outlet (20) for discharging water; a plurality of consumable electrical conductive particles (11) housed in the chamber; means for electrifying the particles which include electrodes (37, 41) and a current source (6); and separator means (36) permeable to the water but suitable for confining the conductive particles in a work area of the chamber and which prevents the contact thereof with at least one of the electrodes (37), the system being **characterized in that** it comprises

    - a unit for monitoring the consumption of particles (4) which captures data associated with the consumption level of the particles in the reactor;
    - a control unit (2) capable of receiving and processing data as well as for triggering, based on these data, commands for operating one or several maintenance devices, the control unit (2) being connected to the cited principal monitoring unit (4) for receiving from the same the captured data relating to the consumption of the particles; and
    - one or several of these maintenance devices, the functioning of which is regulated by the control unit (2), the only or one of the maintenance devices being a reloading device (5), capable of introducing new particles in the chamber (1 a) of the reactor (1).

7.  The system (100) according to claim 6, **characterized in that** the principal monitoring unit (4) comprises a weighing module (40), from which it is suspended or on which the reactor (1) rests, the instantaneous weight of the reactor and the content thereof thus being obtained and thus the instantaneous mass ($M_i$) of the particle bed; and **in that** the control unit (2) is prepared for comparing this instantaneous mass ($M_i$) with a predetermined reference threshold value ($M_r$), triggering an actuation command of the reloading device (5) as a function of the result of this comparison.

8.  The system (100) according to claims 7 or 8, **characterized in that** the reloading device (5) comprises a store (5a) for particles (11) with a discharge pipe (5b) connected to the chamber (1 a) of the reactor, a particle grader (50) and a valve device (14a) operable by the control unit (2).

9.  The system (100) according to any one of claims 6 to 8, **characterized in that** a maintenance device is an ultrasound cleaning device (7) which comprises an ultrasound generating unit (12) of the magnetostrictive type.

10. The system (100) according to any one of claims 6 to 9, **characterized in that** a maintenance device is a mechanical cleaning device (8), equipped with a plurality of injectors (35a) of a gas, a fluid or a mixture of both under pressure which penetrate into the interior of the chamber (1a) of the reactor (1).

11. The system (100) according to the preceding claim, **characterized in that** the mechanical cleaning device (8) comprises a hydraulic fluid supply circuit with a principal supply branch (44) from which various blind branches (35) originate which penetrate into the chamber (1a) of the reactor (1) and in which the injectors (35a) are located or formed.

12. The system (100) according to the preceding claim, **characterized in that** a unit (9) for metering a chemical cleaning solution is connected to the hydraulic circuit.

13. The system (100) according to any one of claims 7 to 12, **characterized in that** it comprises auxiliary monitoring units (10a, 10b) with means for measuring the conductivity ($C_i$) of the flow of water to be purified which is introduced into the chamber (1a) of the reactor (1); the electrical voltage ($V_i$) between the electrodes (37, 41); and the current load (Q), being

$$Q = (\text{current intensity} * \text{time}) / \text{volume of water to be purified};$$

the control unit (2) being connected to these auxiliary monitoring units (10a, 10b) for receiving the data measured by these and the cited control unit (2) being prepared for processing these data received from the auxiliary monitoring units to compare them with a predetermined optimal pattern and for operating the device or, as the case may be, the cleaning devices as a function of the result of this comparison.

14. The system (100) according to claims 9 and 10, **characterized in that** a degree or order of priority is provided to each cleaning device and **in that** the control unit (2) is prepared for activating the cleaning devices in a cascading manner or sequentially following this degree or order of priority according to the deviation of the data received from the auxiliary monitoring units (10a, 10b) with the predetermined optimal pattern.

15. The system (100) according to any one of claims 6 to 14, **characterized in that** in the chamber (1a), a bottom is distinguished, which is arranged below the work area of the chamber, which determines an expansion area to which the inlet (15) for receiving water is connected, a general draining outlet (32) and a lower connection (43) with a recirculation circuit (24); a middle portion, through which the blind branches (35) of the mechanical cleaning device (8) penetrate and in which all or most of the electrodes (37, 41) are arranged; an upper part to which the outlet (20) for discharging water is connected, an upper connection (22) with the recirculation circuit (24) and an inlet for introducing particles into the reactor (1), all the connections to the reactor being prepared to absorb a vertical movement of the reactor caused by the loss of mass associated with the consumption of the particles or by the gaining of mass associated with the introduction of new particles into the reactor.

16. A reactor (1) for electrochemically purifying water which comprises support means on which a water flood chamber (1a) rests, equipped with at least two electrode elements (37, 41) placed in the interior of the chamber, it being possible to apply electrical voltage to said electrode elements and with separator means (36) permeable to water, but suitable for confining a bed of conductive particles (11) in a work area of the chamber, said chamber being provided with various hydraulic connection routes to the exterior, the reactor being **characterized in that** one or various load cells (40) are arranged between the support means and the chamber (1 a) in a suitable manner for measuring weight variations in the assembly which rests on said support means.

**Fig. 1**

**Fig. 2**

**Fig. 4**

**Fig. 3**

## Fig. 5

- Fixed working amperes = 100 A/h
- Density = 200 A/m.
- Activation range of reloading device +2V above V Med. of the value of V/µS/cm$^2$ predetermined average.

## Fig. 6

Europäisches
Patentamt

European
Patent Office

Office européen
des brevets

# EUROPEAN SEARCH REPORT

Application Number

EP 16 38 2276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 730 864 A (TARJANYI M ET AL) 1 May 1973 (1973-05-01) * figure 1 * * example 7 * * column 2, line 7 - line 15 * * column 3, line 45 - line 47 * * column 3, line 67 - column 4, line 27 * ----- | 1-16 | INV. C02F1/461 C02F1/463 ADD. C02F1/467 |
| A | US 4 073 707 A (SPAZIANTE PLACIDO MARIA ET AL) 14 February 1978 (1978-02-14) * the whole document * ----- | 1-16 | |

TECHNICAL FIELDS
SEARCHED      (IPC)

C02F

The present search report has been drawn up for all claims

| Place of search | Date of completion of the search | Examiner |
|---|---|---|
| The Hague | 16 September 2016 | Janssens, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

**EP 3 257 818 A1**

## ANNEX TO THE EUROPEAN SEARCH REPORT
## ON EUROPEAN PATENT APPLICATION NO.

EP 16 38 2276

16-09-2016

| Patent document cited in search report | | Publication date | Patent family member(s) | | Publication date |
|---|---|---|---|---|---|
| US 3730864 | A | 01-05-1973 | BE | 782071 A1 | 13-10-1972 |
| | | | DE | 2218121 A1 | 26-10-1972 |
| | | | FR | 2133734 A1 | 01-12-1972 |
| | | | GB | 1335941 A | 31-10-1973 |
| | | | IT | 953305 B | 10-08-1973 |
| | | | NL | 7205016 A | 17-10-1972 |
| | | | US | 3730864 A | 01-05-1973 |
| US 4073707 | A | 14-02-1978 | NONE | | |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5372690 A
- US 6200449 B
- WO 200526412 A
- WO 200456711 A